# EUROPÄISCHE PATENTSCHRIFT

(11) **EP 1 175 150 B1**
(45) Veröffentlichungstag und Bekanntmachung des Hinweises auf die Patenterteilung: **29.09.2004**
(21) Anmeldenummer: 00918556.2
(22) Anmeldetag: 10.04.2000
(51) Int. Cl.: A21B 5/03, H05B 6/14

(54) **BACKVORRICHTUNG ZUM HERSTELLEN VON ENDLOSEN BÄNDERN**
BAKING DEVICE FOR PRODUCING ENDLESS STRIPS
DISPOSITIF DE CUISSON DESTINE A PRODUIRE DES BANDES SANS FIN

(30) Priorität: 04.05.1999 AT 79599
(43) Veröffentlichungstag der Anmeldung: 30.01.2002
(73) Patentinhaber: FRANZ HAAS WAFFEL-UND KEKSANLAGEN-INDUSTRIE GMBH, 1210 Wien (AT)
(72) Erfinder: HAAS, Franz, A-1210 Wien (AT); HAAS, Johann, A-3400 Klosterneuburg (AT); KOLETNIK, Erich, A-3400 Klosterneuburg (AT)
(74) Vertreter: Puchberger, Rolf
(86) Internationale Anmeldenummer: PCT/AT2000/000086
(87) Internationale Veröffentlichungsnummer: WO 2000/065918

(56) Entgegenhaltungen:
- WO-A-92/15183
- US-A- 4 655 125

## Beschreibung

Die Erfindung bezieht sich auf eine Backvorrichtung zum Herstellen von endlosen Bändern mittels Oberhitze und Unterhitze und auf eine, eine solche Backvorrichtung enthaltende Anlage mit zumindest einer der Backvorrichtung nachgeordneten Verarbeitungsstation für die Bänder.

Die Backvorrichtung ist mit einem um seine Mittelachse kontinuierlich in einer Richtung umlaufenden, im stationären Gestell der Backvorrichtung außerhalb seiner Mittelachse drehbar gelagerten, zylindrischen Backring aus Metall versehen, der zumindest eine zu seiner Mittelachse konzentrische Mantelfläche besitzt und zumindest eine endlose Backfläche durch eine stationäre Backzone bewegt, die mit einer mit Abstand über der Backfläche angeordneten, Oberhitze erzeugenden Heizvorrichtung versehen ist und sich in Laufrichtung des Backringes von einer Aufgabevorrichtung, die eine gießfähige Backmasse auf die Backfläche aufträgt, bis zu einer Abnahmevorrichtung für das auf der Backfläche aus der Backmasse entstandene, zumindest teilweise gebackene Band erstreckt.

Bekannte Backvorrichtungen dieser Art (WO 97 34492 A) werden mit Gas beheizt, wobei der umlaufende Backring durch Gasbrenner oder durch mit Gas beheizte Infrarotstrahler beheizt wird, die entlang seiner Innenseite und entlang seiner Außenseite hintereinander angeordnet sind, ihre Wärme an den Backring bzw. an das auf diesem aufliegende, aus Backmasse gebildete Band abgeben und ihre Verbrennungsgase an den Innenraum des Gehäuses der Backvorrichtung abgeben. Die Verbrennungsgase werden zusammen mit dem Wasserdampf, der während des Backprozesses in dem aus Backmasse gebildeten Band entsteht und aus diesen in den Innenraum des Gehäuses austritt, und zusammen mit der hauptsächlich an der Unterseite des Gehäuses in das Gehäuse eingesaugten Luft nach oben aus dem Gehäuse abgesaugt. Die eingesaugte Luft wird einerseits als Verbrennungsluft für den Betrieb der Gasbrenner bzw. gasbeheizten Infrarotstrahler und anderseits zum Absenken der Temperatur im Innenraum des Gehäuses benötigt, der durch die, entsprechend der Verbrennungstemperatur des jeweils verwendeten Gases sehr heißen Verbrennungsgase mit Temperaturen z. B. im Bereich von 600 °C - 900°C aufgeheizt wird. Um den Innenraum des Gehäuses auf einer Temperatur zu halten, die deutlich unterhalb der Verbrennungstemperatur des jeweils verwendeten Gases liegt und im wesentlichen der Backtemperatur des jeweiligen Bandes (z. B. im Bereich von 200 °C - 250 °C) entspricht, müssen sehr große, über den Bedarf an Verbrennungsluft hinausgehende Luftmengen in das Gehäuse eingesaugt und durch dessen Abzug zusammen mit den Verbrennungsgasen und dem Wasserdampf wieder aus dem Gehäuse abgesaugt werden. Dafür sind in dem den Innenraum des Gehäuses umgebenden, wärmeisolierenden Mantel mehrere Lufteintrittsöffnungen mit relativ großem Gesamtquerschnitt erforderlich und der Abzug des Gehäuses muss mit seinem Abzugsquerschnitt und dem Saugvolumen seines Abzugsgebläses auf ein sehr großes Gasvolumen ausgelegt sein, das sich aus dem Volumen der eingesaugten Luft und aus den im Innenraum des Gehäuses entstehenden Volumina der Verbrennungsgase und des Wasserdampfes zusammensetzt. Bei der bekannten Backvorrichtung kann der umlaufende Backring von einem wärmeisolierenden, im wesentlichen C-förmigen Gehäusemantel umgeben sein, der mit seiner in den Innenraum des Backringes ragenden Aussparung das von den Verbrennungsgasen aufgeheizte und durch die Zumischung von Luft abzukühlende Volumen des Gehäuses verringert. Bei der bekannten Backvorrichtung können an der Innenseite und an der Außenseite des Backringes jeweils zwei oder mehrere Backzonen seitlich nebeneinander angeordnet sein, sodaß auf dem Backring vier oder mehr, jeweils aus Backmasse gebildete Bänder gleichzeitig gebakken werden, die den in ihnen während des Backprozesses entstehenden Wasserdampf an den Innenraum des Gehäuses abgeben und dadurch das aus dem Gehäuse abzusaugende Gasvolumen vergrößern.

In der Nahrungs- und Genußmittelindustrie werden zumeist mit Gas beheizte Backvorrichtung zum Herstellen von endlosen Bändern aus gießfähigen Backmassen oder Backteigen, z.B. flüssigen Waffelteigen, verwendet, die mit einer rotierenden Backtrommel versehen sind, die aus einer mittleren, horizontal angeordneten Nabe, einer kreisförmigen, mit der Nabe einstückig verbundenen, vertikal angeordneten Stützscheibe und einem äußeren, zylindrischen, mit der Stützscheibe einstückig verbundenen Trommelmantel besteht, auf dessen äußerer Mantelfläche ein endloses Band gebacken wird, das vom Trommelmantel abgenommen und einer der Backtrommel unmittelbar benachbarten Verarbeitungsstation zugeführt und in dieser verarbeitet wird. Die über ihre mittlere, im Maschinengestell drehbar gelagerte Nabe angetriebene Backtrommel wird durch Gasbrenner oder durch mit Gas beheizte Infrarotstrahler beheizt, die entlang der Außenseite und der Innenseite des Trommelmantels und entlang der Stützscheibe angeordnet sind, um das auf der Außenseite des Trommelmantels aufliegende, endlose Band zu backen und die Stützscheibe vor Wärmespannungsrissen zu bewahren, die bei fehlender Beheizung der Stützscheibe durch die hohen Temperaturunterschiede zwischen dem beheizten Trommelmantel und der unbeheizten Stützscheibe auftreten würden.

Eine solche Backvorrichtung mit einer durch Gas beheizten Backtrommel wird in einer aus der WO 95/32630 bekannten Anlage zur Herstellung eines im warmen Zustand plastisch verformbaren, endlosen Waffelbandes verwendet, das im warmen Zustand in einer Band-Verarbeitungsvorrichtung in einzelne fächerförmige Waffelstücke zerteilt wird, die in einer nachgeordneten Rollvorrichtung zu Waffeltüten eingerollt werden. Bei der aus der AT-PS 380 151 bekannten Anlage wird auf der Backtrommel ein im warmen Zustand plastisch verformbares, dünnes Waffelband hergestellt, das in der nachgeordneten Band-Verarbeitungsvorrichtung in seiner Längsrichtung oder quer dazu zu einem endlosen, zwei oder mehrlagigen, laminierten Gebäckband zusammengefaltet wird, das im plastisch verformbaren Zustand in einer weiteren nachgeordneten Band-Verarbeitungsvorrichtung weiterverarbeitet wird. Bei der aus der EP-A1 0 211 356 bekannten Anlage wird auf der Backtrommel ein im warmen Zustand plastisch verformbares, endloses Waffelband hergestellt, das in der nachgeordneten Band-Verarbeitungsvorrichtung in einzelne Waffelblätter zerteilt wird, die im plastisch verformbaren Zustand in einer weiteren nachgeordneten Verarbeitungsvorrichtung einzeln weiterverarbeitet werden. Bei der aus der US-PS 3 829 593 bekannten Backvorrichtung wird auf der Backtrommel ein endloses, weiches, nicht vollständig ausgebackenes Teigband hergestellt, das gleich nach seiner Herstellung auf einer Vorratsrolle aufgerollt wird. Dieses auch nach dem Abkühlen auf Zimmertemperatur noch weiche und biegsame Teigband ist das Ausgangsprodukt für die Teighüllen von chinesischen Frühlingsrollen, bei deren Herstellung eine weiche Fülle in ein aus den Teigband herausgeschnittenes, rechteckiges Teigblatt mehrfach eingeschlagen wird, bevor die so entstandene Frühlingsrolle in Öl schwimmend gebacken wird bis die Teighülle knusprig und braun ist. Bei der aus der DE-OS 24 35 110 bekannten Anlage für die Herstellung von vorgefertigten, chinesischen Frühlingsrollen wird auf einer Backtrommel ein weiches, auch bei Zimmertemperatur noch weiches, Teigband hergestellt, das in einer von der Backtrommel im Abstand nachgeordneten Verarbeitungsvorrichtung in einzelne viereckige Teigstücke zerteilt wird, die jeweils zu einer vorgefertigten Frühlingsrolle weiterverarbeitet werden. In der Verarbeitungsvorrichtung wird eine vorgegarte Füllmasse auf ein Teigstück aufgebracht und das Teigstücke um die Füllmasse herum zu einer, diese umschließenden Teighülle zusammengelegt und eingerollt.

Backvorrichtungen mit einer stehend angeordneten und über ihre horizontale Mittelnabe angetriebenen, rotierenden Backtrommel, die entlang ihrem Trommelmantel und entlang ihrer Stützscheibe durch Gasbrenner oder durch mit Gas beheizten Infrarotstrahlern beheizt wird, werden auch in Anlagen zum kontinuierlichen Herstellen von Hohlhippen und Waffelröllchen für die Herstellung eines dünnen, im warmen Zustand plastisch verformbaren Waffelbandes eingesetzt, das in einer der Backtrommel unmittelbar benachbarten Verarbeitungsstation schraubenförmig überlappend zu einem hülsenförmigen Hohlkörper aufgewikkelt wird, der dann in die einzelnen Hohlhippen oder Waffelröllchen abgelängt wird. Für die Herstellung des Waffelbandes wird ein flüssiger, hauptsächlich aus Wasser, Weizenmehl und Zucker bestehender Waffelteig, der bezogen auf seinen Mehlanteil zwischen 25 Gewichtsprozent und 100 Gewichtsprozent Zucker enthält, auf die Außenseite der beheizten, rotierenden Backtrommel aufgebracht und dort zu einem endlosen, im warmen Zustand plastisch verformbaren Band gebacken. Dieses wird durch eine Abnahmevorrichtung kontinuierlich von der Außenseite der Backtrommel abgenommen und in der Verarbeitungsstation kontinuierlich zwischen einer rotierenden Wickelwalze und einem rotierenden Wickeldorn um den Wickeldorn herum schraubenförmig überlappend zu einem hülsenförmigen Hohlkörper aufgewickelt, der durch den Wickelvorgang über den Wickeldorn axial hinausgeschoben wird. Der in seiner Längsrichtung ständig wachsende, hülsenförmige Hohlkörper wird durch eine spezielle Schneidvorrichtung in einzelne Längsstücke geschnitten, die beim Abkühlen auf Zimmertemperatur eine knusprige, spröde, leicht zerbrechliche Konsistenz annehmen und die Hohlhippen bzw. Waffelröllchen darstellen. Zum Herstellen von gefüllten Hohlhippen bzw. Waffelröllchen kann die Füllmasse durch einen hohlen Wickeldorn hindurch direkt in den Hohlraum des vom gebackenen Waffelband gebildeten, hülsenförmigen Hohlkörpers eingebracht werden, der dann zusammen mit der in ihm enthaltenden Füllmasse in die einzelnen, gefüllten Hohlhippen bzw. Waffelröllchen zerschnitten wird.

Aus der US 4 655 125 A ist eine mit einer Unterhitze abgebenden Backwalze ausgestattete Backvorrichtung zum Herstellen von einseitig gebackenen, endlosen Bändern bekannt. Die Backwalze ist mit einem die Backfläche tragenden, äußeren Metallmantel versehen, der durch eine bis nahe an seine Innenseite heranreichende, elektrische Induktionsspule erwärmt wird, die in einer Innenkammer der Backwalze stationär angeordnet ist. Der äußere Metallmantel ist Teil eines die Innenkammer umschließenden, metallenen Walzenköpers, der auf der vom Spulenkörper der Induktionsspule gebildeten, starren Mittelachse zu beiden Seiten der Induktionsspule drehbar gelagert ist. Eine Oberhitze erzeugende Heizvorrichtung ist nicht vorgesehen.

Aus der WO 92 15183 A ist eine mit zwei übereinander angeordneten, Unterhitze abgebenden Backwalzen ausgestattete Backvorrichtung bekannt, in der jeweils der auf der oberen Backwalze entstandene Teigfladen mit seiner Oberseite nach unten auf die untere Backwalze aufgelegt und auf dieser fertig gebacken wird. Bei beiden Backwalzen wird der die Backfläche tragende, äußere, zylindrische Metallmantel durch eine bis nahe an seine Innenseite heranreichende, elektrische Induktionsspule erwärmt, die in der von zwei Kunststoffseitenwänden begrenzten Innenkammer der Backwalze auf einer unbeweglichen, starren Mittelachse sitzt.

Aufgabe der Erfindung ist es, Backvorrichtungen bzw. Backanlagen zum Herstellen von endlosen Bändern mittels Oberhitze und Unterhitze zu verbessern.

Als Lösung wird eine Backvorrichtung zum Herstellen von endlosen Bändern mittels Oberhitze und Unterhitze vorgeschlagen, bei welcher ein um seine Mittelachse kontinuierlich in einer Richtung umlaufender, im stationären Gestell der Backvorrichtung außerhalb seiner Mittelachse drehbar gelagerter, zylindrischer Backring aus Metall vorgesehen ist, der zumindest eine zu seiner Mittelachse konzentrische Mantelfläche besitzt und zumindest eine endlose Backfläche durch eine stationäre Backzone bewegt, die mit einer mit Abstand über der Backfläche angeordneten, Oberhitze erzeugenden Heizvorrichtung versehen ist und sich in Laufrichtung des Backringes von einer Aufgabevorrichtung, die eine gießfähige Backmasse auf die Backfläche aufträgt, bis zu einer Abnahmevorrichtung für das auf der Backfläche aus der Backmasse entstandene, zumindest teilweise gebackene Band erstreckt. Diese Backvorrichtung ist erfindungsgemäß dadurch gekennzeichnet, dass zum Erzeugen der Unterhitze eine mit Abstand über der Backfläche angeordnete, den Backring induktiv erwärmende Heizvorrichtung vorgesehen ist, die eine elektrische Induktionsspule zum induktiven Erwärmen des Backringes aufweist.

Als Lösung wird weiters eine Anlage zum Herstellen und Verarbeiten von endlosen Bändern mit einer die Bänder mittels Oberhitze und Unterhitze erzeugenden Backvorrichtung und zumindest einer dieser nachgeordneten Verarbeitungsstation für die Bänder vorgeschlagen, wobei in der Backvorrichtung ein um seine Mittelachse kontinuierlich in einer Richtung umlaufender, im stationären Gestell der Backvorrichtung außerhalb seiner Mittelachse drehbar gelagerter, zylindrischer Backring aus Metall vorgesehen ist, der zumindest eine zu seiner Mittelachse konzentrische Mantelfläche besitzt und zumindest eine endlose Backfläche durch eine stationäre Backzone bewegt, die mit einer mit Abstand über der Backfläche angeordneten, Oberhitze erzeugenden Heizvorrichtung versehen ist und sich in Laufrichtung des Backringes von einer Aufgabevorrichtung, die eine gießfähige Backmasse auf die Backfläche aufträgt, bis zu einer Abnahmevorrichtung für das auf der Backfläche aus der Backmasse entstandene, zumindest teilweise gebackene Band erstreckt. Diese Anlage ist erfindungsgemäß dadurch gekennzeichnet, dass zum Erzeugen der Unterhitze eine mit Abstand über der Backfläche angeordnete, den Backring induktiv erwärmende Heizvorrichtung vorgesehen ist, die eine elektrische Induktionsspule zum induktiven Erwärmen des Backringes aufweist.

Bei der erfindungsgemäßen Ausbildung der Backvorrichtung zum Herstellen von endlosen Bändern bzw. einer Anlage zum Herstellen und Verarbeiten von endlosen Bändern wird der die Backfläche tragende Backring zum Erzeugen der Unterhitze durch eine oberhalb der Backfläche und im Abstand von dieser angeordnete, elektrische Induktionsspule induktiv erwärmt. Diese kann oberhalb der Backfläche neben der die Oberhitze erzeugenden Heizvorrichtung angeordnet oder in diese integriert sein.

Durch die erfindungsgemäße Ausbildung der Backvorrichtung zum Herstellen der endlosen Bänder bzw. der Anlage zum Herstellen und Verarbeiten der endlosen Bänder kann die gesamte, für den Trocknungs- bzw. Backprozess der mit dem Backring in Berührung stehenden Backmasse erforderliche Wärmemenge, die auf jedes Backmasseband als Oberhitze und/oder Unterhitze einwirkt, durch eine oder mehrere, elektrische Induktionsspulen erzeugt werden, die für die induktive Erwärmung des Backringes vorgesehen sind und hauptsächlich den Backring und sich selbst erwärmen. Dies gilt für einspurige und auch mehrspurige Backvorrichtungen. Bei den einspurigen Backvorrichtungen trägt der Backring entweder nur an der Außenseite, oder sowohl an der Innenseite als auch an der Außenseite jeweils eine endlose Backfläche, der innerhalb der Backvorrichtung eine eigene Backzone für die Herstellung eines endlosen Bandes zugeordnet ist. Bei den mehrspurigen Backvorrichtungen trägt der Backring an der Außenseite und an der Innenseite jeweils zwei oder mehrere, nebeneinander angeordnete, endlose Backflächen, denen innerhalb der Backvorrichtung jeweils eine eigene Backzone für die Herstellung eines endlosen Bandes zugeordnet ist.

Die erfindungsgemäße Ausbildung erlaubt ein rasches und schonendes, induktives Aufheizen des Backringes bzw. seiner jeweiligen Backfläche auf jene Betriebstemperatur, die dem Trocknungs- bzw. Backprozess entspricht, der auf das jeweils herzustellende, endlose Band abgestimmt ist. Sowohl das Aufheizen des Backringes auf seine Betriebstemperatur, als auch das Halten der Betriebstemperatur des Backringes während der kontinuierlichen Herstellung eines endlosen Bandes erfolgt durch die induktive Erwärmung des Backringes. Für ein zusätzliches Bräunen der Oberseite eines endlosen Bandes kann in der betreffenden Backzone nahe der Bandabnahmevorrichtung ein elektrisch beheizter Infrarotstrahler über der das endlose Band tragenden Backfläche angeordnet sein.

Die erfindungsgemäße Ausbildung erlaubt es, Ober- und Unterhitze bei den für die Herstellung der endlosen Bänder erforderlichen Trocknungs- bzw. Backprozessen ohne dem Backring benachbarte Gasbrenner und nur durch die den Backring induktiv erwärmende(n) Induktionsspule(n) zu erzeugen. Bei dieser Ausführung der Backvorrichtung bzw. Anlage wird das Gehäuse während der Herstellung der Bänder nur mehr durch die Induktionsspule(n), den induktiv erwärmten Backring und allenfalls für die Bräunung der Bandoberseite vorgesehene Infrarotstrahler aufgeheizt. Das dem Abgaskanal des Gehäuses zugeordnete Abzugsgebläse muss nur den Backschwaden absaugen, der hauptsächlich aus den während des Trocknungs- bzw. Backprozesses in der Backmasse entstehenden und aus dieser entweichenden Gasen, z. B. Wasserdampf, sowie aus den aus der Backmasse entweichenden, flüchtigen Substanzen besteht, die nur einen sehr geringen Teil des Volumens des Backschwadens ausmachen. Ohne Gasbrenner kann die Ausgestaltung der Backvorrichtung bzw. Anlage erheblich vereinfacht und deren Betrieb viel kostengünstiger gestaltet werden, als dies bei einer Ausführung mit Gasbrennern möglich ist, weil die Gasbrenner einen großen Luftdurchsatz im Gehäuse und ein deutlich stärkeres, mit dem Abgaskanal des Gehäuses verbundenes Abzugsgebläse erforderlich machen, um die gegenüber dem Backschwaden um ein Vielfaches größeren, mit dem Betrieb der Gasbrenner verbundenen Zuluftvolumina und Abgasvolumina bewältigen zu können.

Bei der erfindungsgemäßen Ausbildung einer Backvorrichtung zum Herstellen von endlosen Bändern bzw. einer Anlage zum Herstellen und Verarbeiten von endlosen Bändern können, gegenüber einer gasbeheizten Backvorrichtung bzw. Anlage, sowohl die dem Backring benachbarten Gasbrenner samt ihren Zufuhrleitungen für das Heizgas als auch jene umfangreichen baulichen Vorkehrungen entfallen, die zum einen für das Einsaugen von sehr großen Luftmengen in das Gehäuse und zum anderen für das Absaugen von noch viel größeren Gasmengen aus diesem Gehäuse erforderlich sind. Die erfindungsgemäße Ausbildung erlaubt eine erhebliche Vereinfachung der Backvorrichtung bzw. Anlage und deren für den Abzug der Gase aus dem Gehäuse erforderlichen Einrichtungen. Auch der das Gehäuse umgebende, wärmedämmende Mantel kann einfacher gestaltet und den geringeren Betriebstemperaturen im Innenraum des Gehäuse entsprechend kostengünstiger ausgeführt werden.

Gemäß einem weiteren Merkmal der Erfindung kann eine mit Abstand über der Backfläche des Backringes angeordnete, den Backring induktiv erwärmende, elektrische Induktionsspule vorgesehen sein, die durch ihre eigene Erwärmung auch die Oberhitze für diese mit Abstand unter ihr angeordnete Backfläche erzeugt.

Bei dieser Ausbildung kann die während des Betriebes der Induktionsspule, beim induktiven Erwärmen des Backringes in der Induktionsspule auftretende Erwärmung als Oberhitze für den Trocknungs- bzw. Backprozess der mit dem Backring in Berührung stehenden Backmasse genutzt werden, während die über den Heizkörper als Oberhitze abgestrahlte Wärmemenge der Kühlung der Induktionsspule während ihres Betriebes dient. Im Zuge der Auslegung der erfindungsgemäßen Backvorrichtung bzw. Anlage auf den bei der Herstellung endloser Bänder aus einer vorgegebenen Backmasse durchzuführenden Trocknungs- bzw. Backprozess wird auch die Oberflächentemperatur des die Oberhitze erzeugenden Heizkörpers und die über den Heizkörper als Oberhitze zur Verfügung stehende, durch die Erwärmung der Induktionsspule erzeugte und zur Kühlung der Induktionsspule eingesetzte Wärmemenge festgelegt.

Gemäß einem weiteren Merkmal der Erfindung kann ein an seiner Außenseite eine endlose Backfläche durch eine äußere Backzone und an seiner Innenseite eine endlose Backfläche durch eine innere Backzone bewegender Backring vorgesehen sein, der zum Erzeugen der Unterhitze durch eine elektrische Induktionsspule induktiv erwärmt wird, die mit Abstand über zumindest einer seiner Backflächen angeordnet ist.

Gemäß einem weiteren Merkmal der Erfindung kann zum induktiven Erwärmen des Backringes eine seine Außenseite und seine Innenseite jeweils mit Abstand übergreifende, elektrische Induktionsspule vorgesehen sein, die mit ihrem äußeren Abschnitt die Oberhitze für die Außenseite des Backringes und mit ihrem inneren Abschnitt die Oberhitze für die Innenseite des Backringes erzeugt.

Gemäß einem weiteren Merkmal der Erfindung kann die elektrische Induktionsspule als ein mit Abstand über zumindest einer Backfläche des Backringes angeordnetes, bogenförmig gekrümmtes, in Laufrichtung des Backringes langgestrecktes und dessen Bewegungsbahn freilassendes Element ausgebildet sein.

Das bogenförmig gekrümmte Element der elektrischen Induktionsspule kann sich entlang der Bewegungsbahn des Backringes über ein Viertel der Umfangslänge des Backringes erstrecken.

Gemäß einem weiteren Merkmal der Erfindung kann die elektrische Induktionsspule als ein die Backflächen des Backringes jeweils mit Abstand übergreifendes und den Backring C-förmig umgreifendes Element ausgebildet sein.

Gemäß einem weiteren Merkmal der Erfindung kann die elektrische Induktionsspule als ein die Backflächen des Backringes jeweils mit Abstand übergreifendes und den Backring vollständig umgreifendes Element ausgebildet sein.

Die zum induktiven Erwärmen des Backringes vorgesehene, die Außen- und Innenseite des Backringes mit Abstand übergreifende, elektrische Induktionsspule kann als rohrförmiger, sich längs der Bewegungsbahn des Backringes erstreckender Heizkörper ausgebildet sein. Dieser Heizkörper kann einen Körper aus elektrisch isolierendem Material aufweisen, in den die Windungen der Induktionsspule eingebettet sind.

Nachstehend wird die Erfindung an Ausführungsbeispielen anhand der Zeichnungen näher erläutert. In den Zeichnungen zeigen: Fig. 1 schematisch eine mehrspurige Anlage zum Herstellen von Waffelröllchen im Schrägriss, Fig. 2 eine Backvorrichtung mit umlaufendem Backring und einer ersten Ausführungsform einer elektrischen Induktionsspule zum induktiven Erwärmen des Backringes und Fig. 3 eine Schrägansicht eines Backringes mit einer zweiten Ausführungsform einer elektrischen Induktionsspule zum induktiven Erwärmen des Backringes.

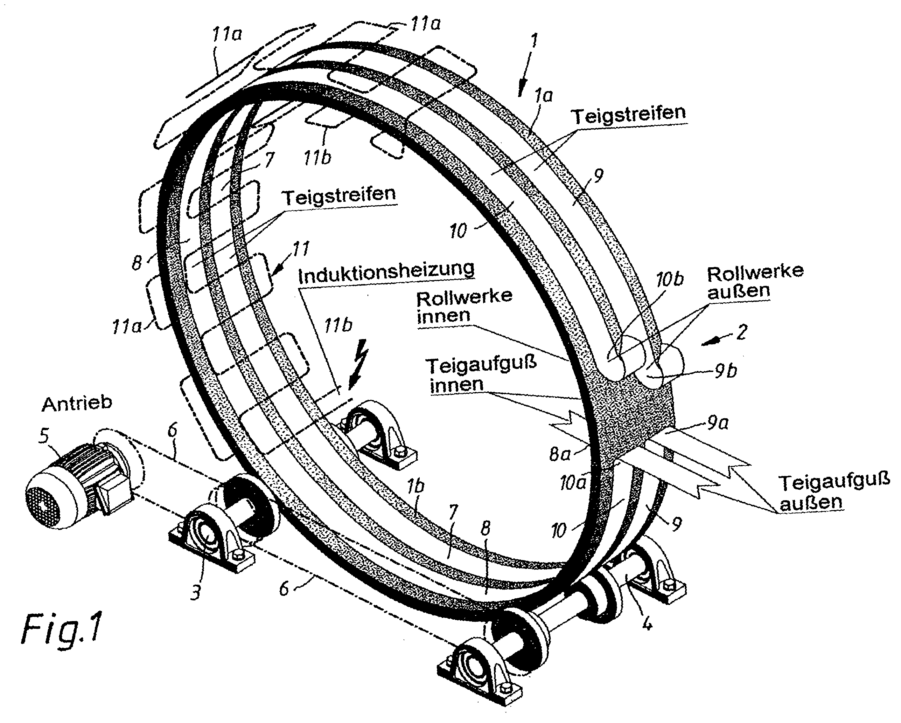

Die Fig. 1 zeigt eine mehrspurige Anlage zum Herstellen von Waffelröllchen bzw. Hohlhippen, bei der an der Innenseite und an der Außenseite eines stehend angeordneten, umlaufenden Backringes 1 jeweils zwei endlose, im warmen Zustand plastisch verformbare Waffelbänder hergestellt werden, die in einer Bandverarbeitungsstation 2 durch der Innenseite bzw. der Außenseite des Backringes benachbarte, in der Fig. 1 nur schematisch angedeutete, Rollwerke schraubenförmig überlappend zu hülsenförmigen Hohlkörpern aufgewickelt werden, die in die einzelnen Waffelröllchen bzw. Hohlhippen zerteilt werden. Der Backring 1 liegt nahe seinem unteren Scheitel mit seiner Unterseite auf zwei, im nicht dargestellten Maschinengestell im Abstand voneinander angeordneten Antriebswellen 3, 4 auf, die den Backring 2 tragen und von einem Antriebsmotor 5 über eine endlose Antriebskette 6 angetrieben werden. Der zylindrische Backring 1 trägt an seinen, zu seiner Mittelachse jeweils konzentrischen äußeren und inneren Mantelflächen 1a und 1b jeweils eine endlose Backfläche, der zwei stationäre, nebeneinander angeordnete Backzonen zugeordnet sind. Die Backzonen sind in Fig. 1 durch die Teigstreifen 7, 8, 9, 10 dargestellt, die sich in der jeweiligen Backzone vom Teigaufguß 8a, 9a, 10a entlang dem Umfang des Backringes 2 bis zur Bandabnahme 9b, 10b erstrecken. Bei jeder Backzone ist die Bandabnahme 9b, 10b im Bereich des vorderen Scheitels des Backringes 2 über dem Teigaufguß 8a, 9a, 10a angeordnet. Von der Bandabnahme 9b, 10b weg wird das am Backring 2 gebackene Waffelband direkt dem jeweiligen Rollwerk zugeführt.

Der umlaufende Backring 2 und die mit ihm in Berührung stehenden und mit ihm umlaufenden Teigstreifen 7, 8, 9, 10 werden durch eine stationäre, elektrische Induktionsspule 11 beheizt, die sich im Bereich der hinteren Hälfte des Backringes 2 entlang der Bewegungsbahn des Backringes 2 erstreckt und für alle vier Backzonen die zum Backen der vier Teigstreifen 7, 8, 9, 10 erforderliche Unterhitze und Oberhitze erzeugt. Die elektrische Induktionsspule 11 ist im wesentlichen flach ausgebildet und besitzt eine sich entlang der Außenseite des Backringes 2 erstreckende, äußere Hälfte 11a und eine sich entlang der Innenseite des Backringes 2 erstreckende, innere Hälfte 11b. Der zwischen den beiden Hälften 11a und 11b der Induktionsspule 11 angeordnete Backring 2 durchläuft das von der Induktionsspule 11 erzeugte Magnetfeld und wird durch die Induktionsspule 11 induktiv erwärmt. Die im Backring 2 induktiv erzeugte Wärme wirkt als Unterhitze auf die mit seinen beiden Backflächen in Berührung stehenden Teigstreifen 7, 8, 9, 10 ein. Die von der auf ihre Betriebstemperatur aufgeheizten Induktionsspule 11 abgestrahlte Wärme wirkt im Bereich der äußeren Hälfte 11 a der Induktionsspule 11 als Oberhitze auf die beiden äußeren Teigstreifen 9 und 10 und im Bereich der inneren Hälfte 11b der Induktionsspule 11 als Oberhitze auf die beiden inneren Teigstreifen 7 und 8.

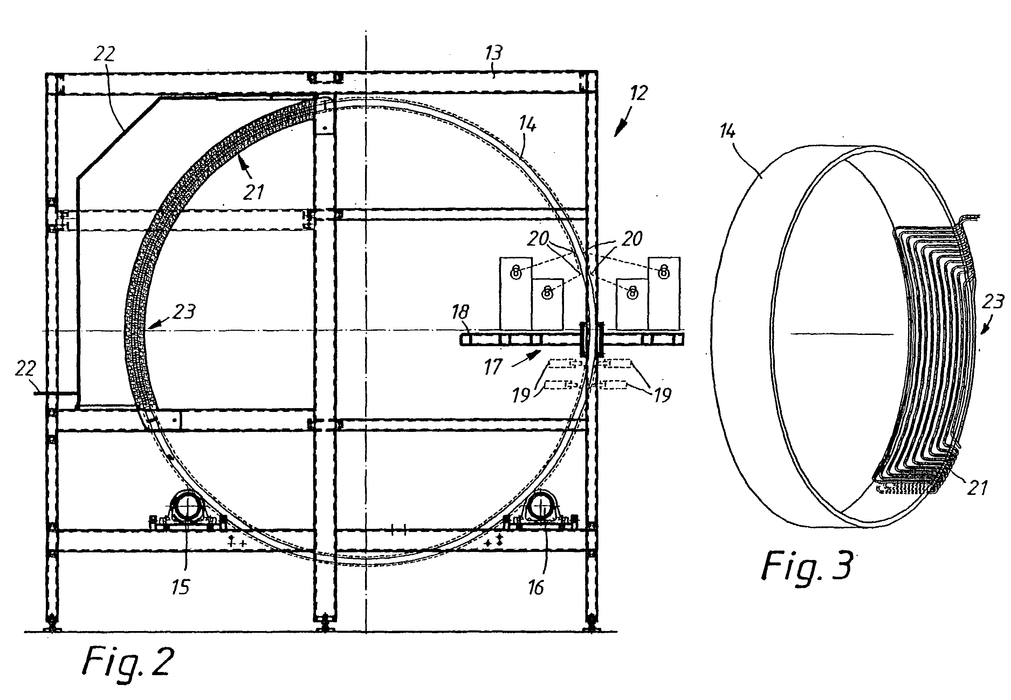

Die Fig. 2 zeigt eine erfindungsgemäße Backvorrichtung 12 mit einem stationären Maschinengestell 13, in dem ein umlaufender, zylindrischer Backring 14 aus Metall auf zwei horizontalen Antriebswellen 15, 16 aufliegt, die den Backring 14 in Rotation um seine Mittelachse versetzen. Im Bereich des in Fig. 2 rechts dargestellten Scheitels 17 des Backringes 14 sind unterhalb der durch die horizontal verlaufende Mittelachse des Backringes 14 verlaufenden, horizontalen Ebene 18 die stationären Aufgabevorrichtungen 19 für die Backmasse angeordnet. Oberhalb der Ebene 18 sind die stationären Band-Abnahmevorrichtungen 20 angeordnet. In jeder Backzone bildet die auf die Außenseite bzw. Innenseite des Backringes 14 aufgebrachte Backmasse ein kontinuierliches Band, das sich entlang dem Umfang des Backringes 14 durch einen Winkelbereich von etwa 340 Grad von der Backmasse-Aufgabevorrichtung 19 bis zur Band-Abnahmevorrichtung 20 erstreckt. In der in Fig. 2 links dargestellten Hälfte des Maschinengestelles 13 ist eine elektrische Induktionsspule 21 vorgesehen, die den Backring 14 mit Abstand umgibt, in Umlaufrichtung des Backringes langgestreckt ausgebildet ist und im wesentlichen quer zur Umlaufrichtung des Backringes 14 verlaufende Windungen besitzt. Die Induktionsspule 21 ist über die elektrischen Leitungen 22 mit einer nicht dargestellten Einrichtung zum Erzeugen des für den Betrieb der Induktionsspule 21 verwendeten, elektrischen Wechselstromes verbunden. Die Induktionsspule 21 kann in einen rohrförmigen Heizkörper mit rechteckigem Querschnitt eingebaut sein, der sich längs der Bewegungsbahn des Backringes 14 erstreckt und durch die Betriebswärme der Induktionsspule 21 beheizt wird.

Zum induktiven Erwärmen eines Backringes mit einer Breite von 400 mm und einer Dicke von 30 mm kann eine Induktionsspule mit 75 kW Heizleistung verwendet werden, die mit einem Strom von 520 A und einer Wechselstromfrequenz von 1,1 kHz gespeist wird.

Die Fig. 3 zeigt ein Ausführungsbeispiel für eine elektrische Induktionsspule 21, die einen Backring 14 im Bereich seines, in Fig. 3 rechts dargestellten, Scheitels 23 über einen Winkelbereich von 90 Grad umgibt und hauptsächlich in Umlaufrichtung des Backringes 14 verlaufende Windungen besitzt.

## Patentansprüche

1. Backvorrichtung (12) zum Herstellen von endlosen Bändern mittels Oberhitze und Unterhitze, bei welcher ein um seine Mittelachse kontinuierlich in einer Richtung umlaufender, im stationären Gestell (13) der Backvorrichtung (12) außerhalb seiner Mittelachse drehbar gelagerter, zylindrischer Backring (1, 14) aus Metall vorgesehen ist, der zumindest eine zu seiner Mittelachse konzentrische Mantelfläche (1a, 1b) besitzt und zumindest eine endlose Backfläche durch eine stationäre Backzone bewegt, die mit einer mit Abstand über der Backfläche angeordneten, Oberhitze erzeugenden Heizvorrichtung versehen ist und sich in Laufrichtung des Backringes (1, 14) von einer stationären Aufgabevorrichtung (8a, 9a, 10a, 19), die eine gießfähige Backmasse auf die Backfläche aufträgt, bis zu einer stationären Abnahmevorrichtung (9b, 10b, 20) für das auf der Backfläche aus der Backmasse entstandene, zumindest teilweise gebackene Band (7, 8, 9, 10) erstreckt, ***dadurch gekennzeichnet,* dass** zum Erzeugen der Unterhitze eine mit Abstand über der Backfläche angeordnete, den Backring (1, 14) induktiv erwärmende Heizvorrichtung vorgesehen ist, die eine elektrische Induktionsspule (11, 21) zum induktiven Erwärmen des Backringes (1, 14) aufweist.

2. Backvorrichtung nach Anspruch 1, **dadurch gekennzeichnet, dass** eine mit Abstand über der Backfläche des Backringes (1, 14) angeordnete, den Backring (1, 14) induktiv erwärmende, elektrische Induktionsspule (11, 21) vorgesehen ist, die durch ihre eigene Erwärmung auch die Oberhitze für diese mit Abstand unter ihr angeordnete Backfläche erzeugt.

3. Backvorrichtung nach Anspruch 1 oder 2, **dadurch gekennzeichnet, dass** ein an seiner Außenseite (1a) eine endlose Backfläche durch eine äußere Backzone und an seiner Innenseite (1b) eine endlose Backfläche durch eine innere Backzone bewegender Backring (1) vorgesehen ist, der zum Erzeugen der Unterhitze durch eine elektrische Induktionsspule (11) induktiv erwärmt wird, die mit Abstand über zumindest einer seiner Backflächen angeordnet ist.

4. Backvorrichtung nach Anspruch 3, **dadurch gekennzeichnet, dass** zum induktiven Erwärmen des Backringes (1) eine seine Außenseite (1a) und seine Innenseite (1b) jeweils mit Abstand übergreifende, elektrische Induktionsspule (11) vorgesehen ist, die mit ihrem äußeren Abschnitt (11a) die Oberhitze für die Außenseite (1a) des Backringes (1) und mit ihrem inneren Abschnitt (11b) die Oberhitze für die Innenseite (1b) des Backringes (1) erzeugt.

5. Backvorrichtung nach einem der Ansprüche 1 bis 4, **dadurch gekennzeichnet, dass** die elektrische Induktionsspule (11, 21) als ein mit Abstand über zumindest einer Backfläche des Backringes (1, 14) angeordnetes, bogenförmig gekrümmtes, in Laufrichtung des Backringes (1, 14) langgestrecktes und dessen Bewegungsbahn freilassendes Element ausgebildet ist.

6. Backvorrichtung nach Anspruch 5, **dadurch gekennzeichnet, dass** die elektrische Induktionsspule (11, 21) als ein die Backflächen des Backringes (1, 14) jeweils mit Abstand übergreifendes und den Backring (1, 14) C-förmig umgreifendes Element ausgebildet ist.

7. Backvorrichtung nach Anspruch 5, **dadurch gekennzeichnet, dass** die elektrische Induktionsspule (11, 21) als ein die Backflächen des Backringes (1, 14) jeweils mit Abstand übergreifendes und den Backring (1, 14) vollständig umgreifendes Element ausgebildet ist.

8. Anlage zum Herstellen und Verarbeiten von endlosen Bändern mit einer die Bänder mittels Oberhitze und Unterhitze erzeugenden Backvorrichtung (12) und zumindest einer dieser nachgeordneten Verarbeitungsstation (2) für die Bänder, wobei in der Backvorrichtung (12) ein um seine Mittelachse kontinuierlich in einer Richtung umlaufender, im stationären Gestell (13) der Backvorrichtung (12) außerhalb seiner Mittelachse drehbar gelagerter, zylindrischer Backring (1, 14) aus Metall vorgesehen ist, der zumindest eine zu seiner Mittelachse konzentrische Mantelfläche besitzt und zumindest eine endlose Backfläche durch eine stationäre Backzone bewegt, die mit einer mit Abstand über der Backfläche angeordneten, Oberhitze erzeugenden Heizvorrichtung versehen ist und sich in Laufrichtung des Backringes (1, 14) von einer Aufgabevorrichtung (8a, 9a, 10a, 19), die eine gießfähige Backmasse auf die Backfläche aufträgt, bis zu einer Abnahmevorrichtung (9b, 10b, 20) für das auf der Backfläche aus der Backmasse entstandene, zumindest teilweise gebackene Band (7, 8, 9, 10) erstreckt, ***dadurch gekennzeichnet,* dass** zum Erzeugen der Unterhitze eine mit Abstand über der Backfläche angeordnete, den Backring (1, 14) induktiv erwärmende Heizvorrichtung vorgesehen ist, die eine elektrische Induktionsspule (11, 21) zum induktiven Erwärmen des Backringes (1, 14) aufweist

9. Anlage nach Anspruch 8, **dadurch gekennzeichnet, dass** bei der Backvorrichtung eine mit Abstand über der Backfläche des Backringes (1, 14) angeordnete, den Backring (1, 14) induktiv erwärmende, elektrische Induktionsspule (11, 21) vorgesehen ist, die durch ihre eigene Erwärmung auch die Oberhitze für diese mit Abstand unter ihr angeordnete Backfläche erzeugt.

10. Anlage nach Anspruch 8 oder 9, **dadurch gekennzeichnet, dass** bei der Backvorrichtung ein an seiner Außenseite (1a) eine endlose Backfläche durch eine äußere Backzone und an seiner Innenseite (1b) eine endlose Backfläche durch eine innere Backzone bewegender Backring
(1) vorgesehen ist, der zum Erzeugen der Unterhitze durch eine elektrische Induktionsspule (11) induktiv erwärmt wird, die mit Abstand über zumindest einer seiner Backflächen angeordnet ist.

11. Anlage nach Anspruch 10, **dadurch gekennzeichnet, dass** zum induktiven Erwärmen des Backringes (1) eine seine Außenseite (1a) und seine Innenseite (1b) jeweils mit Abstand übergreifende, elektrische Induktionsspule (11) vorgesehen ist, die mit ihrem äußeren Abschnitt (11a) die Oberhitze für die Außenseite (1a) des Backringes (1) und mit ihrem inneren Abschnitt (11b) die Oberhitze für die Innenseite (1b) des Backringes (1) erzeugt.

12. Anlage nach einem der Ansprüche 8 bis 11, **dadurch gekennzeichnet, dass** die elektrische Induktionsspule (11, 21) als ein mit Abstand über zumindest einer Backfläche des Backringes (1, 14) angeordnetes, bogenförmig gekrümmtes, in Laufrichtung des Backringes (1, 14) langgestrecktes und dessen Bewegungsbahn freilassendes Element ausgebildet ist.

13. Anlage nach Anspruch 12, **dadurch gekennzeichnet, dass** die elektrische Induktionsspule (11, 21) als ein die Backflächen des Backringes (1, 14) jeweils mit Abstand übergreifendes und den Backring (1, 14) C-förmig umgreifendes Element ausgebildet ist.

14. Anlage nach Anspruch 12, **dadurch gekennzeichnet, dass** die elektrische Induktionsspule (11, 21) als ein die Backflächen des Backringes (1, 14) jeweils mit Abstand übergreifendes und den Backring (1, 14) vollständig umgreifendes Element ausgebildet ist

## Claims

1. A baking device (12) for producing endless strips by means of heat from above and heat from below, in which there is provided a cylindrical baking ring (1, 14) of metal revolving continuously in one direction about its central axis and rotatably mounted outside its central axis in a stationary frame (13) of the baking device (12), which baking ring has at least one surface (1a, 1 b) concentric with its central axis and moves at least one endless baking surface through a stationary baking zone, which zone is provided with a heating device generating heat from above arranged at a distance above the baking surface and which zone extends in the running direction of the baking ring (1, 14) from a stationary loading device (8a, 9a, 10a, 19), which applies a pourable baking mass to the baking surface, as far as a stationary removal device (9b, 10b, 20) for the at least partially baked strip (7, 8, 9,10) that has formed on the baking surface from the baking mass, **characterised in that**, to produce the heat from below, there is provided a heating device arranged a distance above the baking surface for inductively heating the baking ring (1, 14), which heating device comprises an electric induction coil (11, 21) for inductively heating the baking ring (1, 14).

2. A baking device according to claim 1, **characterised in that** an electric induction coil (11, 21) inductively heats the baking ring (1, 14) and is arranged a distance above the baking surface of the baking ring (1, 14), which electric heating coil by its intrinsic heating also generates the heat from above for this baking surface arranged a distance beneath it.

3. A baking device according to claim 1 or 2, **characterised in that** a baking ring (1) moves on its outside (1a) an endless baking surface through an outer baking zone and on its inside (1b) an endless baking surface through an inner baking zone, which baking ring, to generate the heat from below, is inductively heated by the electric induction coil (11) that is arranged a distance above at least one of its baking surfaces.

4. A baking device according to claim 3, **characterised in that** for inductive heating of the baking ring (1) there is provided engaging over its outside (1a) and its inside (1b), in each case at a distance, an electric induction coil (11), which with its outer section (11 a) generates the heat from above for the outside (1 a) of the baking ring (1) and with its inner section (11 b) generates the heat from above for the inside (1b) of the baking ring (1).

5. A baking device according to any one of claims 1 to 4, **characterised in that** the electric induction coil (11, 21) is in the form of an arcuately curved element arranged a distance above at least one baking surface of the baking ring (1, 14) and elongated in the running direction of the baking ring (1, 14) and leaving clear the path of movement thereof.

6. A baking device according to claim 5, **characterised in that** the electric induction coil (11, 21) is in the form of an element engaging over the baking surfaces of the baking ring (1, 14), in each case at a distance, and engaging around the baking ring (1, 14) in a C-shape.

7. A baking device according to claim 5, **characterised in that** the electric induction coil (11, 21) is in the form of an element engaging over the baking surfaces of the baking ring (1, 14), in each case at a distance, and completely enclosing the baking ring (1, 14).

8. An installation for producing and processing endless strips, having a baking device (12) producing the strips by means of heat from above and heat from below, and at least one processing station (2) for the strips downstream of the baking device, wherein in the baking device (12) there is provided a cylindrical baking ring (1, 14) of metal revolving continuously in one direction about its central axis and rotatably mounted outside its central axis in a stationary frame (13) of the baking device (12), which baking ring has at least one surface concentric with its central axis and moves at least one endless baking surface through a stationary baking zone, which zone is provided with a heating device generating heat from above arranged at a distance above the baking surface and which zone extends in the running direction of the baking ring (1, 14) from a loading device (8a, 9a, 10a, 19), which applies a pourable baking mass to the baking surface, as far as a stationary removal device (9b, 10b, 20) for the at least partially baked strip (7, 8, 9, 10) that has formed on the baking surface from the baking mass, **characterised in that**, to produce the heat from below, there is provided a heating device arranged a distance above the baking surface for inductively heating the baking ring (1, 14), which heating device comprises an electric induction coil (11, 21) for inductively heating the baking ring (1, 14).

9. An installation according to claim 8, **characterised in that** in the baking device an electric induction coil (11, 21) inductively heats the baking ring (1, 14) and is arranged a distance above the baking surface of the baking ring (1, 14), which electric induction coil by its intrinsic heating also generates the heat from above for this baking surface arranged a distance beneath it.

10. An installation according to claim 8 or 9, **characterised in that** in the baking device a baking ring (1) moves on its outside (1a) an endless baking surface through an outer baking zone and on its inside (1b) an endless baking surface through an inner baking zone, which baking ring, to generate the heat from below, is inductively heated by the electric induction coil (11) that is arranged a distance above at least one of its baking surfaces.

11. An installation according to claim 10, **characterised in that** for inductive heating of the baking ring (1) there is provided engaging over its outside (1a) and its inside (1b), in each case at a distance, the electric induction coil (11), which with its outer section (11 a) generates the heat from above for the outside (1 a) of the baking ring (1) and with its inner section (11b) generates the heat from above for the inside (1b) of the baking ring (1).

12. An installation according to any one of claims 8 to 11, **characterised in that** the electric induction coil (11, 21) is in the form of an arcuately curved element arranged a distance above at least one baking surface of the baking ring (1, 14) and elongated in the running direction of the baking ring (1, 14) and leaving clear the path of movement thereof.

13. An installation according to claim 12, **characterised in that** the electric induction coil (11, 21) is in the form of an element engaging over the baking surfaces of the baking ring (1, 14), in each case at a distance, and engaging around the baking ring (1, 14) in a C-shape.

14. An installation according to claim12, **characterised in that** the electric induction coil (11, 21) is in the form of an element engaging over the baking surfaces of the baking ring (1, 14), in each case at a distance, and completely enclosing the baking ring (1, 14).

## Revendications

1. Dispositif (12) de cuisson pour la production de bandes sans fin au moyen d'un chauffage supérieur et d'un chauffage inférieur, dans lequel il est prévu un anneau (1, 14) cylindrique de cuisson en métal, tournant continuellement dans un sens par rapport à son axe médian, monté tournant dans le bâti (13) fixe du dispositif (12) de cuisson en dehors de son axe médian, qui a au moins une surface (1a, 1b) latérale concentrique à l'axe médian et qui déplace au moins une surface sans fin de cuisson dans une zone de cuisson fixe, qui est munie d'un dispositif de chauffage, produisant le chauffage supérieur et disposé à distance au-dessus de la surface de cuisson et qui s'étend, dans la direction de déplacement de l'anneau (1, 14) de cuisson, à partir d'un dispositif (8a, 9a, 10a, 19) fixe de chargement, qui dépose une masse à cuire susceptible de s'écouler sur la surface de cuisson, jusqu'à un dispositif (9b, 10b, 20) fixe de réception de la bande (7, 8, 9, 10) cuite au moins en partie et formée sur la surface de cuisson à partir de la masse à cuire, **caractérisé en ce que**, pour produire le chauffage inférieur, il est prévu un dispositif disposé à distance au-dessus de la surface de cuisson, chauffant par induction l'anneau (1, 14) de cuisson et ayant une bobine (11, 21) électrique d'induction pour le chauffage par induction de l'anneau (1, 14) de cuisson.

2. Dispositif de cuisson suivant la revendication 1, **caractérisé en ce qu'**il est prévu une bobine (11, 21) électrique d'induction à distance au-dessus de la surface de cuisson de l'anneau (1, 14) de cuisson, chauffant par induction l'anneau (1, 14) de cuisson et produisant par son échauffement propre également le chauffage supérieur pour cette surface de cuisson disposée à distance en dessous d'elle.

3. Dispositif de cuisson suivant la revendication 1 ou 2, **caractérisé en ce qu'**il est prévu un anneau (1) de cuisson, déplaçant, sur sa face (1a) extérieure une surface de cuisson sans fin dans une zone extérieure de cuisson et sur sa face (1b) intérieure une surface de cuisson sans fin dans une zone de cuisson intérieure, cet anneau étant réchauffé par induction, pour la production du chauffage inférieur par une bobine (11 ) électrique d'induction, qui est disposée à distance au moins au-dessus de l'une de ses surfaces de cuisson.

4. Dispositif de cuisson suivant la revendication 3, **caractérisée en ce que**, pour l'échauffement par induction de l'anneau (1) de cuisson, il est prévu une bobine (11) électrique d'induction, recouvrant sa face (1a) extérieure et sa face (1 b) intérieure respectivement à distance, bobine qui produit par sa partie (11a) extérieure le chauffage supérieur de la face (1a) extérieure de l'anneau (1) de cuisson et par sa partie (11b) inférieure le chauffage supérieur de la face (1 b) intérieure de l'anneau (1) de cuisson.

5. Dispositif de cuisson suivant l'une des revendications 1 à 4, **caractérisé en ce que** la bobine (11, 21) électrique d'induction est constituée sous la forme d'un élément disposé à distance au-dessus d'au moins l'une des surfaces de cuisson de l'anneau (1, 14) de cuisson, courbé en forme d'arc, s'étendant en longueur dans la direction de déplacement de l'anneau (1, 14) de cuisson et dégageant la voie de déplacement de celui-ci.

6. Dispositif de cuisson suivant la revendication 5, **caractérisé en ce que** la bobine (11, 21) électrique d'induction est constituée sous la forme d'un élément recouvrant à distance respectivement les surfaces de cuisson de l'anneau (1, 14) de cuisson et entourant en forme de C l'anneau (1, 14) de cuisson.

7. Dispositif de cuisson suivant la revendication 5, **caractérisé en ce que** la bobine (11, 21) électrique d'induction est constituée sous la forme d'un élément recouvrant les surfaces de cuisson de l'anneau (1, 14) de cuisson respectivement à distance et entourant entièrement l'anneau (1, 14) de cuisson.

8. Installation de production et de traitement de bandes sans fin comprenant un dispositif (12) de cuisson produisant les bandes au moyen d'un chauffage supérieur et d'un chauffage inférieur et au moins un poste (12) de traitement de ces bandes en aval, dans lequel il est prévu, dans le dispositif (12) de cuisson, un anneau (1, 14) cylindrique de cuisson en métal, tournant continuellement dans un sens par rapport à son axe médian, monté tournant dans le bâti (13) fixe du dispositif (12) de cuisson en dehors de son axe médian qui a au moins une surface (1a, 1b) latérale concentrique à l'axe médian et qui déplace au moins une surface sans fin de cuisson dans une zone de cuisson fixe, qui est munie d'un dispositif de chauffage produisant le chauffage supérieur et disposé à distance au-dessus de la surface de cuisson, et qui s'étend dans la direction de déplacement de l'anneau (1, 14) de cuisson, à partir d'un dispositif (8a, 9a, 10a, 19) fixe de chargement, qui dépose une masse à cuire susceptible de s'écouler sur la surface de cuisson jusqu'à un dispositif (9b, 10b, 20) fixe de réception de la bande (7, 8, 9, 10) cuite au moins en partie et formée sur la surface de cuisson à partir de la masse à cuire, **caractérisé en ce que** pour produire le chauffage inférieur, il est prévu un dispositif disposé à distance au-dessus de la surface de cuisson, chauffant par induction l'anneau (1, 14) de cuisson et ayant une bobine (11, 21) électrique d'induction pour le chauffage par induction de l'anneau (1, 14) de cuisson.

9. Installation suivant la revendication 8, **caractérisé en ce qu'**il est prévu dans le dispositif de cuisson une bobine (11, 21) électrique d'induction disposée à distance au-dessus de la surface de cuisson de l'anneau (1, 14) de cuisson, réchauffant l'anneau (1, 14) de cuisson par induction et produisant par son échauffement propre également le chauffage supérieur pour cette surface de cuisson disposée en dessous d'elle.

10. Installation suivant la revendication 8 ou 9, **caractérisée en ce que** dans le dispositif de cuisson, il est prévu un anneau (1) de cuisson, déplaçant sur sa face (1a) extérieure une surface de cuisson sans fin dans une zone extérieure de cuisson et sur sa face (1b) intérieure une surface de cuisson sans fin dans une zone de cuisson intérieure, cet anneau étant réchauffé par induction pour la production du chauffage inférieur par une bobine (11) électrique d'induction, qui est disposée à distance au moins au-dessus de l'une de ses surfaces de cuisson.

11. Installation suivant la revendication 10, **caractérisée en ce que**, pour l'échauffement par induction de l'anneau (1) de cuisson, il est prévu une bobine (11) électrique d'induction, recouvrant sa face (1a) extérieure et sa face (1 b) intérieure respectivement à distance, bobine qui produit par sa partie (11a) extérieure le chauffage supérieur de la face (1a) extérieure de l'anneau (1) de cuisson et par sa partie (11b) inférieure le chauffage supérieur de la face (1 b) intérieure de l'anneau (1) de cuisson.

12. Installation suivant les revendications 8 à 11, **caractérisé en ce que** la bobine (11, 21) électrique d'induction est constituée sous la forme d'un élément disposé à distance au-dessus d'au moins l'une des surfaces de cuisson de l'anneau (1, 14) de cuisson, courbé en forme d'arc, s'étendant en longueur dans la direction de déplacement de l'anneau (1, 14) de cuisson et dégageant la voie de déplacement de celui-ci.

13. Installation suivant la revendication 12, **caractérisé en ce que** la bobine (11, 21) électrique d'induction est constituée sous la forme d'un élément recouvrant à distance respectivement les surfaces de cuisson de l'anneau (1, 14) de cuisson et entourant en forme de C l'anneau (1, 14) de cuisson.

14. Installation suivant la revendication 12, **caractérisée en ce que** la bobine (11, 21) électrique d'induction est constituée sous la forme d'un élément recouvrant les surfaces de cuisson de l'anneau (1, 14) de cuisson respectivement à distance et entourant entièrement l'anneau (1, 14) de cuisson.
